# EUROPEAN PATENT APPLICATION

(11) **EP 4 306 344 A1**
(43) Date of publication of application: **17.01.2024**
(21) Application number: 23181918.6
(22) Date of filing: 27.06.2023
(51) Int. Cl.: B60G 17/0195, B60T 11/00

(54) **VEHICLE CONTROL SYSTEM AND ASSOCIATED METHODS**

(30) Priority: 30.06.2022 GB 202209672
(71) Applicant: Gray & Adams Limited, Fraserburgh Aberdeenshire AB43 9HU (GB)
(72) Inventor: LAIRD, Alexander Bruce, Fraserburgh, AB43 9HU (GB); SMITH, David Mark, Fraserburgh, AB43 9HU (GB)
(74) Representative: HGF

(57) **Abstract**

A commercial vehicle control system 30 for controlling a suspension ride-height, the control system 30 has an auxiliary control system 40 for controlling the suspension ride-height. The auxiliary control system 40 is additional to a primary control system 23 for automatically controlling the suspension ride-height. The primary control system 23 is a suspension ride-height control system operable in dependence on an Electronic Braking System (EBS) signal. The auxiliary control system 40 is an automatic suspension ride-height control system operable in dependence on an auxiliary signal from an alternative source other than the Electronic Braking System (EBS).

## Description

### TECHNICAL FIELD

The present invention relates to vehicle system control and particularly to a control system for controlling a ride-height suspension of a vehicle, or component thereof, such as a trailer. Aspects of the invention relate to a trailer; a vehicle incorporating the trailer; and a method of operating a trailer and vehicle associated therewith.

### BACKGROUND

Commercial vehicles such as trucks, lorries and Heavy Goods Vehicles (HGVs) are used to transport goods, for example from supplier to warehouse/outlet. HGVs may be used to transport a variety of goods, which can include refrigerated and frozen goods.

Road networks can include bridges and other height restricting infrastructure, whereby it is generally preferable to maintain an HGV height of less than 5metres. Suspension ride-height can be advantageously adapted, such as to reduce overall vehicle height - amongst other benefits.

Various active and passive driver assistance systems have been developed to help increase safety on the roads. For example, Anti-lock Braking Systems (ABS); Electronic Stability Program (ESP); Adaptive Cruise Control (ACC); Anti-Slip Regulation (ASR, also called Traction Control System, "TCS"); and Electronic Braking Systems (EBS) can be deployed to mitigate risks associated with road transportation of such vehicles. ABS prevents the locking of wheels under braking. ESP involves the automatic stabilisation of the vehicle in critical driving situations to reduce risk of rolling or skidding. ACC automatically maintains a correct distance from the vehicle in front, adapted to the speed at which it is traveling, thus helping to avoid rear-end collisions. ASR provides a secondary safety feature in conjunction with ABS to help prevent the vehicle's wheels from losing traction by controlling the engine and brakes in adverse conditions.

EBS effectively integrates ABS and ASR into one electronic system, with the EBS providing a quicker response time and a shorter braking distance with electronically-controlled air brake valves compared to conventional pneumatic control. EBS can also provide additional functionality such as control of wear, downhill cruise control and Coupling Force Control (CFC) to distribute braking power optimally between a tractor vehicle and semi-trailer as appropriate.

The risk mitigation can be so effective that adoption of such systems can become mandatory. For example, in at least some jurisdictions, some classes of vehicles may be required to comprise an Electronic Braking System (EBS).

Vehicles, such as large lorries or HGVs with trailers, or smaller vehicles also with a trailer/s, can have EBS connected from the primary tractor unit to the trailer via a bespoke EBS connector (e.g. 7-pole plug/socket), typically in addition to other connectors (e.g. power supplies for other systems).

It may be an aim of certain examples of the present invention to solve, mitigate or obviate, at least partly, at least one of the problems and/or disadvantages associated with the prior art. Certain examples aim to provide at least one of the advantages described herein.

### SUMMARY

Aspects of the invention provide a control system; a trailer; and a vehicle, such as a HGV including a trailer, comprising the control system as claimed in the appended claims.

According to a first aspect there is provided a control system for a vehicle or component thereof. The control system may be for controlling a suspension, such as a suspension ride-height. The control system may comprise an auxiliary control system for controlling the suspension, the auxiliary control system being additional, complementary or back-up to a primary control system for controlling the suspension ride-height. The primary control system may comprise a suspension ride-height control system operable in dependence on an Electronic Braking System (EBS) signal. The auxiliary control system may comprise a suspension ride-height control system operable in dependence on an auxiliary signal different from the Electronic Braking System (EBS) signal.

Accordingly, there may be provided a control system for a commercial vehicle, the control system comprising an automatic suspension ride-height adjustment, the control system being operable in dependence on a signal from an auxiliary or alternative source other than the Electronic Braking System (EBS).

The auxiliary control system may comprise a back-up system. The auxiliary control system may comprise a redundant system. The auxiliary control system may be configured to automatically adjust the suspension ride-height in addition to or instead of a primary control system for controlling the suspension ride-height. The auxiliary control system may be operable in dependence of an activation of a brake pedal. The auxiliary control system may be configured to operate a suspension ride-height adjustment or actuator, such as a suspension ride-height control valve, in dependence on the auxiliary control system receiving an input control signal from an operation of a brake pedal, such as by a driver of a primary tractor unit of the vehicle or associated with the trailer. The auxiliary control system may be configured to be operated by a same user action or input as the primary control system. For example, the auxiliary and primary control systems may both be operable by a user's activation of a brake pedal.

In at least one example, there is provided an auxiliary control system for controlling the suspension ride-height of a commercial vehicle or a trailer thereof, the auxiliary control system being configured to automatically adjust the suspension ride-height in addition to or instead of a primary control system for controlling the suspension ride-height. The auxiliary control system may be configured to operate a suspension ride-height adjustment or actuator, such as a suspension ride-height control valve, in dependence on the auxiliary control system receiving an input control signal from an operation of a brake pedal, such as by a driver of a primary tractor unit of the vehicle or associated with the trailer. The auxiliary control system's operation may be dependent on receipt of a signal from a brake light cable.

Accordingly, there may be provided an automatic suspension ride-height adjustment in dependence on an input of a brake light signal. The provision of an automatic suspension ride-height adjustment in dependence on an input of a brake light signal may be in addition to the provision of automatic suspension ride-height adjustment in dependence on an input of a EBS signal. Accordingly, there may be provided two distinct automatic suspension ride-height adjustment control systems, each of the two being triggered by an activation of a brake pedal. The two distinct systems may operate based upon separate electrical signals associated with the activation of the brake pedal.

The brake light signal is typically transmitted via a separate cable (and separate coupling where appropriate) - discrete from the cable (/coupling) for an Electronic Braking System (EBS) signal. Accordingly, the present invention can enable an automatic suspension ride-height adjustment in an absence of an EBS signal. The present invention may provide a fallback, back-up or redundant automatic suspension ride-height adjustment in an event of a failure of an EBS system.

The auxiliary control system may be configured to operate the ride-height suspension adjustment independently of any input from an EBS. The auxiliary control system may be configured to operate the ride-height suspension adjustment in an absence of an input from an EBS cable. For example, in an event of a failure in an EBS system, such as an EBS cable, coupling or EBS control fault, the auxiliary control system may be configured to adjust the suspension ride-height.

The auxiliary control system may be configured to operate in an absence of any EBS, such as in an absence of any EBS signal/s. The auxiliary control system may be configured to operate the suspension actuator in an absence of any EBS, such as in an absence of any EBS signal/s. The auxiliary control system may be configured to operate the suspension actuator in dependence on a signal carried by a non-EBS cable.

In at least some examples, there is provided a control system configured to operate a suspension actuator to automatically return or automatically adjust to ride height in dependence on at least one input from either or both of: a EBS signal; and/or a brake light signal.

The automatic ride-height adjustment input signal received at the suspension actuator may be dependent on one or both of: a EBS signal; and/or a brake light signal. The suspension actuator may be activatable in dependence on receipt of an input derived from either a EBS signal; and/or a brake light signal.

The vehicle may comprise a commercial vehicle, such as a commercial goods vehicle (e.g. truck, lorry, HGV or the like). The vehicle may comprise a refrigerated goods vehicle. The vehicle or component thereof may comprise a trailer, such as a HGV trailer. Accordingly, the auxiliary control system may be configured to automatically adjust the suspension ride-height of a trailer and/or vehicle.

The auxiliary control system may be configured to output a signal to the suspension actuator in dependence on a time factor. The auxiliary control unit may comprise a timer to measure a time interval, such as the time interval of receipt of an input signal. The time interval may be associated with an activity. For example, the time interval may be associated with a length of time of depression of the brake pedal by the driver. The time interval may correspond to a typical duration to perform or complete an activity. For example, the time interval may correspond to a length of time sufficiently long to typically bring a vehicle to rest or corresponding to when a vehicle is stationary (e.g. when a driver depresses the brake pedal continuously when stopped at traffic lights, etc.). The time interval may be predefined. The time interval may comprise at least 1 second; at least 2 seconds; at least 5 seconds; at least 10 seconds; or at least 15 seconds. In at least some examples, the time interval may comprise a range, with a lower and an upper limit, such as between 5 seconds and 15 seconds.

Additionally or alternatively, the auxiliary control unit may be configured to operate the suspension actuator in dependence on a sequence or series of inputs. For example, the auxiliary control unit may be configured to operate the suspension actuator in dependence on a series of similar inputs from the brake light signal, such as associated with a sequential pumping of the brake pedal.

The auxiliary control unit may be configured to operate the suspension actuator in dependence on a latching signal; such as using a pulse or impulse relay.

The auxiliary control system may be configured to operate on an alternative and/or additional input signal. For example, the auxiliary control unit may be configured to operate the suspension actuator in dependence on one or more signals t In o the trailer from the primary tractor. In at least some examples, the auxiliary control unit may be configured to operate the suspension actuator in dependence on an input to the trailer via a non-EBS cable or coupling. The auxiliary control unit may be configured to operate the suspension actuator in dependence on any input to the trailer via a non-EBS cable or coupling. The auxiliary control unit may be configured to operate the suspension actuator in dependence on an input to the trailer via a non-EBS cable or coupling. The auxiliary control unit may be configured to operate the suspension actuator in dependence on an input intended for a different primary function. For example, the auxiliary control unit may be configured to operate the suspension actuator in dependence on one or more of: a lighting signal; an indicator signal; a braking signal; a reversing signal; an auxiliary power signal. The auxiliary control unit may be configured to operate the suspension actuator in dependence on at least one of a plurality of signals or inputs. The auxiliary control unit may be configured to operate the suspension actuator in dependence of an input from a plurality of possible sources. In at least one example, the auxiliary control unit may be configured to operate the suspension actuator in dependence on any of the inputs from a trailer socket/plug, coupling or cable (e.g. any one of inputs from 7-pin or 13-pin socket/plug/cable), such as from any one or more of the 7S and 7N socket inputs.

The auxiliary control unit may be comprised in the vehicle. It will be appreciated that the auxiliary control unit for controlling the suspension ride-height may be comprised in the primary tractor or in the trailer. In at least some examples, the auxiliary control unit may be retrofitted to an existing primary tractor unit or to an existing trailer.

The auxiliary control unit may be adjustable. The auxiliary control unit may be programmable. The auxiliary control unit may be adjustable or programmable to enable setting of the ride height, particularly initial setting of the ride height, such as when associated with or incorporated into a particular vehicle or trailer. The auxiliary control unit may be manually adjustable or programmable. The auxiliary control unit may be adjustable or programmable, such as to allow variation (e.g. predetermined variation) of the ride height/s. In at least some examples, the auxiliary control system may be configured to accommodate more than one ride height. For example, where a vehicle or trailer may be reconfigurable between at least two ride-heights, the auxiliary control system may be configured or configurable to automatically adjust to: a single or both of the ride heights (e.g. as selected or as predefined). For example, where a vehicle or trailer is reconfigurable between at least two ride-heights, the auxiliariy control system may be configured or configurable to automatically adjust to a preferred ride height.The preferred ride-height may be the last ride height. The preferred ride height may be the last-selected ride-height. The preferred ride height may be determined in dependence upon one or more inputs, such as a location (e.g. geo-location/GPS); a memory input; a user input.

According to a second aspect of the present invention there is provided a vehicle comprising the auxiliary control system as described above.

According to a third aspect of the present invention there is provided a trailer comprising the auxiliary control system as described above.

According to a fourth aspect of the present invention there is provided a vehicle, such as a Heavy Goods Vehicle, comprising a tractor unit and a trailer as described above.

According to a fifth aspect of the present invention there is provided a method of operating a ride-height suspension. The method may comprise an automatic suspension ride-height adjustment in dependence on an input of a brake light signal. The method may also comprise an automatic suspension ride-height adjustment in dependence on an input of a EBS signal. The method may comprise an automatic suspension ride-height adjustment in dependence on an input of a brake light signal in addition to the provision of automatic suspension ride-height adjustment in dependence on an input of a EBS signal. Accordingly, there may be provided a method of automatic suspension ride-height adjustment based upon two control systems, or at least two distinct inputs, each of the two being triggered by an activation of a brake pedal. The method may comprise operating an automatic suspension ride-height adjustment based upon receipt of at least one of two separate electrical signals associated with the activation of the brake pedal. The method may comprise operating an automatic suspension ride-height adjustment in dependence on receipt of either one of two separate electrical signals associated with the activation of the brake pedal. The method may comprise accommodating receipt of at least two separate electrical signals associated with the activation of the brake pedal. The method may comprise operating the automatic suspension ride-height adjustment in dependence of a single one of two separate electrical signals associated with the activation of the brake pedal.

According to a sixth aspect of the present invention there is provided a controller for performing the method as described above. Accordingly, there is provided a controller arranged to operably cause a vehicle or trailer to automatically adjust suspension ride height in dependence on an input derivable from at least two sources. There may be provided a controller comprising: input means for receiving a brake light signal; output means for outputting a signal to cause a suspension actuator to adjust a ride height; and control means arranged to control the output means to cause the suspension actuator to adjust a ride height in dependence on the brake light signal. Advantageously, there may be additionally provided an input means for receiving an EBS signal, such that the control means is arranged to control the output means to cause the suspension actuator to adjust a ride height in dependence on at least two possible signal inputs comprising the brake light signal input and the EBS signal input.

Aspects and embodiments of the invention provide a controller, a system, a method and a vehicle as claimed in the appended claims.

### BRIEF DESCRIPTION OF THE DRAWINGS

Examples of the invention are further described hereinafter with reference to the accompanying drawings, in which:
Figure 1 is a side view of an example vehicle, comprising a primary tractor and a trailer, according to the present invention;
Figure 2 is a schematic view of an example Electronic Braking System; and
Figure 3 is a schematic view of an example suspension ride height control system according to the present invention.
Throughout the drawings like numerals refer to like parts.

### DETAILED DESCRIPTION

Certain terminology is used in the following description for convenience only and is not limiting. Unless otherwise specified, the use of ordinal adjectives, such as, "first", "second", "third" etc. merely indicate that different instances of like objects are being referred to and are not intended to imply that the objects so described must be in a given sequence, either temporally, spatially, in ranking or in any other manner.

Throughout this specification reference is made to a "front" and a "rear" of a trailer. Unless otherwise specified, the "front" of the trailer is intended to mean the portion of the trailer which is adjacent to a tractor unit in use. The "rear" of the trailer is intended to mean the portion of the trailer furthest from the tractor unit in use.

As used herein, the term "Heavy Goods Vehicle" (HGV) encompasses any motor vehicle having a tractor and a trailer with a gross mass or combination mass (GCM) of over 3,500 kg. For example, HGV may include lorries, trucks and the like. An HGV trailer is thus a trailer suitable for use with a tractor unit.

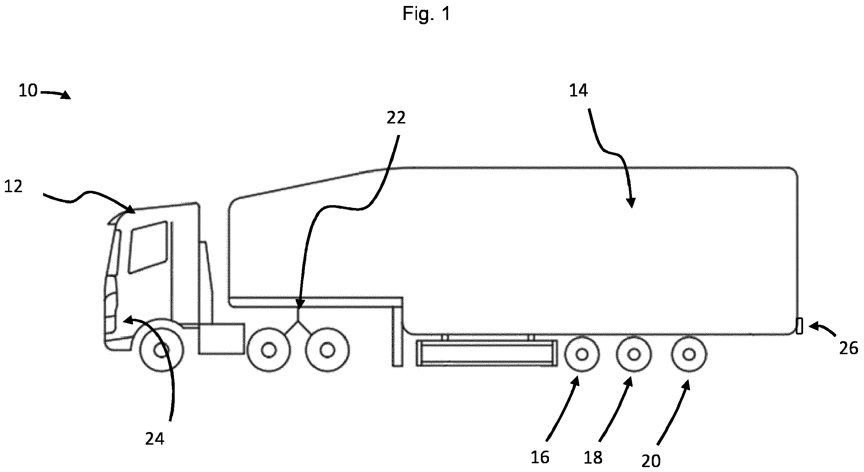

Figure 1 illustrates a side view of a commercial vehicle 10, shown here as a HGV with a primary tractor unit 12 and a trailer 14. The trailer chassis may include at least one axle for at least one pair of wheels 16. As shown in this example, the trailer chassis has three pairs of wheels 16, 18, 20 on three parallel axles. The chassis may have a wheelbase of between 7500 mm and 9000 mm, such as 8100 mm.

Within the cab of the tractor unit 12, various control devices are located to allow the driver to operate the vehicle 10. These include a foot-operated brake pedal 24, which can provide the primary dynamic braking input for the vehicle 10, such as to reduce speed when moving. As well as activating the brake, the operation of the brake pedal 24 sends a signal to the rear brake light 26 of the vehicle 10, located at the rear of the trailer 14, with the brake light signal being transmitted from the tractor unit 12 to the trailer 14 via a cabled connection therebetween.

In the example shown, the trailer is mechanically coupled to the tractor unit 12 via a kingpin 22, with various electrical connections also being coupled between the tractor unit 12 and the trailer 14 (not shown in Figure 1).

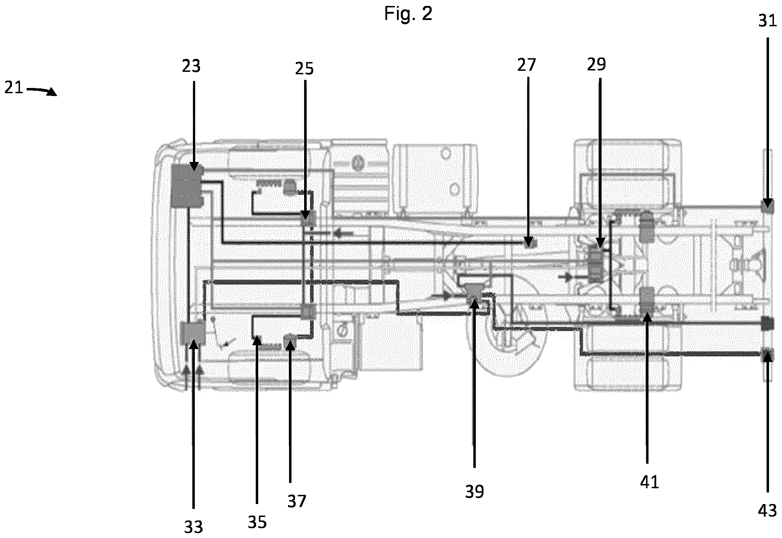

Figure 2 shows a schematic view of an Electronic Braking System (EBS) 21, such as can be incorporated in the vehicle 10 of Figure 1. The EBS comprises an EBS control unit 23. Here, there is also shown a front axle pressure control module 25 and a rear axle pressure control module 29. There is provided a rear axle load sensor 27 and a speed sensor 35. Although shown here without a trailer, the CAN-bus 31 to the trailer, the trailer control pressure 43 and the trailer control module 39 are all shown. The connections to the rear axle wheel cylinder 41 and the front axle wheel cylinder 37; and the service brake valve 33 are also visible.

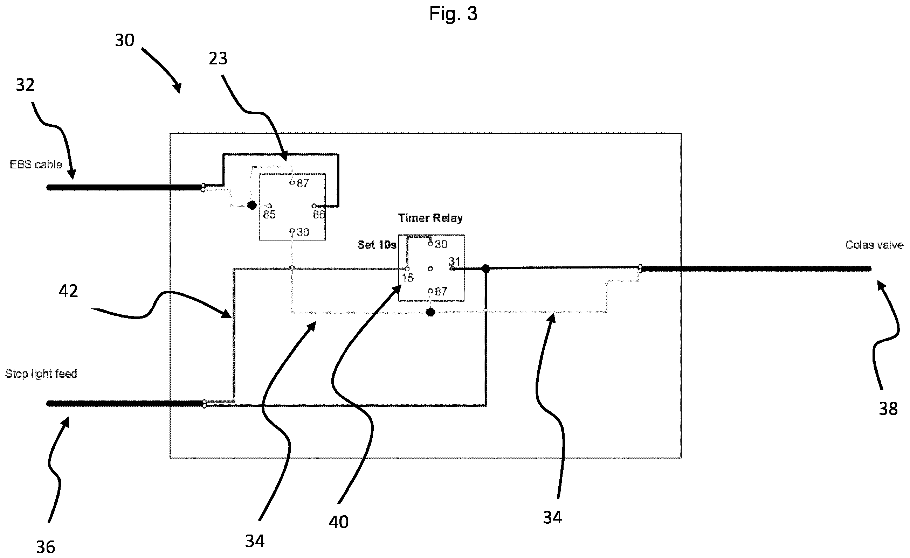

It will be appreciated that the EBS 21 can enable optimisation of the braking and drive operations of the vehicle of Figure 1. For example, an electropneumatic brake, ABS and ASR can be integrated as basic functions within the EBS 21. Wear in components can also be reduced by the electronic adjustment of the braking force by the EBS 21. The EBS 21 operates via an electronic control signal from a brake pedal sensor associated with the brake pedal 24 of the vehicle 10, the electronic control signal being transmitted to the EBS control unit 23 and then sent to the pressure control modules 25, 29 with practically no time delay. This signal is distinct from that for the brake light signal for the rear brake light 26. In addition, an EBS signal can be used to adjust the suspension to return to ride height, as shown in Figure 3.

Referring now to Figure 3, there is shown a schematic view of a ride-height suspension control system 30 according to the present invention. As can be seen here, a signal 34 is taken from the EBS cable 32, via the EBS control unit 23, to input to a ride-height suspension actuator 38, such as an air suspension valve (e.g. COLAS^{®} or the like). In normal operation, the EBS cable 32 provides an electrical signal to operate the ride-height suspension actuator 38 to ensure that the suspension is at, or returns to, a correct suspension ride-height (e.g. for safe movement of the trailer/vehicle). Accordingly, the suspension ride-height can be automatically actuated in response to operation of the EBS 30. For example, after loading/unloading, the suspension may not, or no longer, be set at the correct ride height. Activation via receipt of the EBS signal, such as upon sensed brake activation, can ensure an automatic return to ride height.

The suspension ride-height may require adjustment for loading or unloading; such as compensating for when the trailer is fully-laden or with an empty consignment. For example, where the trailer 14 height is adjusted for docking, there may be a considerable difference with the optimal or correct ride-height for suspension in transit. The control of the ride-height suspension using the EBS input 34 ensures that the suspension is automatically adjusted or re-adjusted for the vehicle 10 to travel. Accordingly, the suspension is automatically adjusted to the appropriate ride height to ensure: protection of the trailer 14 and the goods therewithin; improved handling, such as reduced roll; and to ensure that the overall vehicle height (e.g. as defined by the trailer 14) is not excessive, such as to mitigate that the overall vehicle height does not represent a danger for bridge strikes, particularly an unforeseen danger (e.g. where the actual overall vehicle height does not match the driver's perceived or expected overall vehicle height).

However, it has been observed by the present inventors that where an EBS 30 is faulty or absent, such as due to a missing or incorrect coupling or defect cable 32, one of the consequences can be a failure to adjust ride height, such as a failure to automatically return to ride height (e.g. after loading/unloading, docking, etc.). Whilst an EBS failure can also have other consequences, such as a lack of or defective ABS, the present inventors have devised a particular safety system to mitigate a failure to return to ride height automatically in response to the EBS signal.

As can be seen from Figure 3, the ride-height suspension control system 30 according to the present invention also includes an auxiliary control system with an auxiliary control unit 40. As well as receiving an input of the EBS signal 34 output from the EBS control unit 23, the auxiliary control unit 40 also receives a brake light input 42 derived from the brake light cable 36. Accordingly, whenever the brake pedal 24 is activated, signals are transmitted along both the EBS cable 32 and the brake light cable 36. Separate inputs 34, 42 derived from these cable signals can each be used as inputs to activate the suspension actuator 38. It will be appreciated that the EBS cable 32 and the brake light cable 36 are distinct, separate cables, also with distinct, separate couplings between the tractor unit 12 and the trailer 14. Accordingly, there are two distinct, independent systems 23, 40 for automatically adjusting the suspension to ride height, such as for returning to ride height after loading/unloading. The independence of the auxiliary control unit 40 to be able to operate without any EBS signal 34 ensures that there can be an automatic return to ride height - even when the driver may be oblivious to any EBS failure. The auxiliary control system 40 shown here incorporates a timer to provide a threshold for the activation, based upon the brake light signal being provided for 10 seconds. Accordingly, the automatic adjustment via the suspension actuator 38 can be associated with prolonged braking events, of 10 seconds. It will be appreciated that in other embodiments, the timer may be otherwise be adapted or even omitted.

The above described features result in a vehicle/trailer which can automatically adjust to ride height without requiring an EBS input, such as in an event of a failure or omission of a EBS cable, coupling or EBS internally. Whilst there may be other dangers associated with an EBS failure, the present invention can mitigate several issues associated with an EBS failure, rendering the vehicle 10 in a safer state than where no such auxiliary control system 40 for adjusting the suspension ride height is present. The vehicle 10 or trailer 14 can be automatically returned to ride height in a similar fashion as when EBS is functional (e.g. when the brake pedal is activated) to ensure that the risks of transit at an incorrect ride height can be reduced (e.g. risk of bridge strike, rolling, skidding, etc.). In practice a vehicle 10 can still be driven when the EBS 30 has failed; particularly where a driver is not alerted to the failure of the EBS 30. The present invention can mitigate at least some of the risks associated with driving a vehicle with an EBS failure.

Throughout this specification, the words "comprise" and "contain" and variations of them mean "including but not limited to", and they are not intended to (and do not) exclude other components, integers or steps. Throughout this specification, the singular encompasses the plural unless the context otherwise requires. In particular, where the indefinite article is used, the specification is to be understood as contemplating plurality as well as singularity, unless the context requires otherwise. Throughout this specification, the term "about" is used to provide flexibility to a range endpoint by providing that a given value may be "a little above" or "a little below" the endpoint. The degree of flexibility of this term can be dictated by the particular variable and can be determined based on experience and the associated description herein.

Features, integers or characteristics described in conjunction with a particular aspect or example of the invention are to be understood to be applicable to any other aspect or example described herein unless incompatible therewith. All of the features disclosed in this specification, and/or all of the steps of any method or process so disclosed, may be combined in any combination, except combinations where at least some of such features and/or steps are mutually exclusive. The invention is not restricted to the details of any foregoing examples. The invention extends to any novel feature or combination of features disclosed in this specification. It will be also be appreciated that, throughout this specification, language in the general form of "X for Y" (where Y is some action, activity or step and X is some means for carrying out that action, activity or step) encompasses means X adapted or arranged specifically, but not exclusively, to do Y.

Each feature disclosed in this specification may be replaced by alternative features serving the same, equivalent or similar purpose, unless expressly stated otherwise. Thus, unless expressly stated otherwise, each feature disclosed is one example only of a generic series of equivalent or similar features.
The reader's attention is directed to all papers and documents which are filed concurrently with or previous to this specification in connection with this application and which are open to public inspection with this specification, and the contents of all such papers and documents are incorporated herein by reference.

## Claims

1. A commercial vehicle control system for controlling a suspension ride-height, the control system comprising an auxiliary control system for controlling the suspension ride-height, the auxiliary control system being additional to a primary control system for automatically controlling the suspension ride-height, wherein the primary control system comprises a suspension ride-height control system operable in dependence on an Electronic Braking System (EBS) signal; and the auxiliary control system comprises an automatic suspension ride-height control system operable in dependence on an auxiliary signal from an alternative source other than the Electronic Braking System (EBS).

2. The commercial vehicle control system of claim 1, wherein the auxiliary control system is configured to be operated by a same user action as the primary control system, optionally wherein the auxiliary control system is operable in dependence of an activation of a brake pedal, optionally
wherein the auxiliary and the primary control systems comprise two distinct automatic suspension ride-height adjustment control systems, each of the two being triggered by an activation of the brake pedal, wherein the two distinct systems are operable based upon separate electrical signals associated with the activation of the brake pedal.

3. The commercial vehicle control system of any preceding claim, wherein the auxiliary control system's operation is dependent on receipt of a signal from a brake light cable.

4. The commercial vehicle control system of any preceding claim, wherein the control system is configured to provide an automatic suspension ride-height adjustment in an absence of an EBS signal, such as in an event of a failure of an EBS system.

5. The commercial vehicle control system of any preceding claim, wherein the auxiliary control system is configured to operate the automatic ride-height suspension adjustment independently of any input from the EBS.

6. The commercial vehicle control system of any preceding claim, wherein the auxiliary control system is configured to operate the suspension actuator in an absence of any EBS signal/s.

7. The commercial vehicle control system of any preceding claim, wherein the control system is configured to operate a suspension actuator to automatically adjust to ride height in dependence on at least one input from either or both of: a EBS signal; and/or a brake light signal.

8. The commercial vehicle control system of any preceding claim, wherein the auxiliary control system comprises a timer to measure a time interval of receipt of an input signal; and the auxiliary control system is configured to output a signal to the suspension actuator in dependence on the measured time interval.

9. The commercial vehicle control system of any preceding claim, wherein the control system is programmable to enable setting of the ride height.

10. A vehicle comprising the commercial vehicle control system of any preceding claim, optionally wherein the auxiliary control unit is comprised in a primary tractor, or optionally wherein the auxiliary control unit is comprised in a trailer.

11. The vehicle of claim 10, wherein the auxiliary control unit has been retrofitted thereto.

12. The vehicle of any of claims 10 to 11, wherein the vehicle comprises a HGV.

13. A trailer comprising the commercial vehicle control system of any preceding claim.

14. A method of operating a ride-height suspension, the method comprising an automatic suspension ride-height adjustment in dependence on an input of a brake light signal, optionally, wherein the method also comprises an automatic suspension ride-height adjustment in dependence on an input of an EBS signal, optionally, wherein the method comprises operating an automatic suspension ride-height adjustment in dependence on receipt of either one of two separate electrical signals associated with the activation of the brake pedal.

15. A controller arranged to operably cause a vehicle or trailer to automatically adjust suspension ride height in dependence on an input derivable from at least two sources, wherein the controller comprises: input means for receiving a brake light signal; output means for outputting a signal to cause a suspension actuator to adjust a ride height; and control means arranged to control the output means to cause the suspension actuator to adjust a ride height in dependence on the brake light signal, optionally, wherein there is additionally provided an input means for receiving an EBS signal, such that the control means is arranged to control the output means to cause the suspension actuator to adjust a ride height in dependence on at least two possible signal inputs comprising the brake light signal input and the EBS signal input.
